# EUROPEAN PATENT SPECIFICATION

(11) **EP 1 602 569 B1**
(45) Date of publication and mention of the grant of the patent: **20.08.2008**
(21) Application number: 05011628.4
(22) Date of filing: 30.05.2005
(51) Int. Cl.: B62J 35/00

(54) **Vehicle provided with a fuel tank**
Fahrzeug mit Kraftstoffbehälter
Véhicule pourvu d'un réservoir de carburant

(30) Priority: 31.05.2004 JP 2004162180
(43) Date of publication of application: 07.12.2005
(73) Proprietor: Yamaha Hatsudoki Kabushiki Kaisha, Iwata-shi, Shizuoka-ken (JP)
(72) Inventor: Suzuki, Satoshi, Iwata-shi Shizuoka-ken (JP); Hirano, Fumito, Iwata-shi Shizuoka-ken (JP)
(74) Representative: Grünecker, Kinkeldey, Stockmair & Schwanhäusser Anwaltssozietät

(56) References cited:
- US-A- 4 449 723

## Description

The present invention relates to a vehicle according to the preamble of independent claim 1. Such a vehicle can be taken from the prior art document US 4,449,726.

Conventionally, in a vehicle frame structure for motor cycles disclosed in JP-A-2002-205679, a bracket is each attached to at the rear end of left and right main frames in pairs. These brackets are separately provided as such without establishing a right-and-left coupling therebetween so that a fuel tank or any other electrical components are closely placed between these right and left brackets.

The issue here is that in the conventional vehicle frame structure for motor cycles as above, for the purpose of keeping a space for closely placing electrical components or others, a bracket is each attached to at the rear end of left and right main frames in pairs. These brackets are separately provided as such without establishing a right-and-left coupling therebetween, thereby resulting in complicated frame structure, and cost increase for a vehicle frame.

It is an objective of the present invention to provide a vehicle as indicated above, that can ensure the fuel tank capacity, allow placement of a plurality of components on the upper part of the vehicle frame, and ease the component layout around a fuel tank.

This objective is solved in an inventive manner by a vehicle having the features of independent claim 1. Preferred embodiments are laid down in the dependent claims. Accordingly, it is provided a vehicle in particular two-wheeled vehicle, comprising a fuel tank and a vehicle frame, wherein the fuel tank is supported by the vehicle frame with a space provided between a bottom surface portion of the fuel tank and an upper surface of the vehicle frame.

Accordingly, the vehicle frame is provided with a first frame that extends rearward, wherein the fuel tank is supported by the first frame with a space provided between a front bottom surface portion of the fuel tank and an upper surface of the first frame.

Therein, it is beneficial if a shape of the front center portion of a bottom surface portion of the fuel tank is formed to correspond to a downward-slanting part of the first frame.

Also, the first frame may be located at a center portion in a vehicle width direction.

Further, the fuel tank is provided with a front right bottom surface portion and a front left bottom surface portion, which are protruding downward lower than the front center bottom surface portion.

Further, preferably the fuel tank, in particular side surfaces of the front right bottom surface portion and the front left bottom surface portion, is supported by a side surface of the first frame in such a manner that the space is formed between the front center bottom surface portion and the upper surface of the first frame.

Still further, preferably guide brackets and positioning members are provided, respectively being attached to the front left bottom surface portion and the front right bottom surface portion of the fuel tank, and to the side surfaces of the first frame and facing the guide brackets, wherein the fuel tank is supported by the main frame through insertion of the guide brackets to each corresponding positioning member.

According to a further embodiment, the vehicle frame is provided with a second frame that extends rearward with a specific angle with respect to the first frame, wherein the fuel tank is supported by the second frame with a space between a rear portion thereof and an upper surface of the second frame.

Therein, the rear portion of the fuel tank may be provided with a flat portion, wherein the fuel tank is supported by the second frame at the rear of the flat portion in such a manner that the flat portion is parallel to the second frame.

Moreover, the second frame may be located at a center portion in a vehicle width direction.

Also, the flat portion of the fuel tank may be supported by a bracket attached to the sub frame, wherein a positioning member is provided at a position facing the bracket, and wherein the rear end portion of the fuel tank is supported by the sub frame by fixing the bracket to the positioning member of the sub frame using a bolt through a rubber damper.

According to another embodiment, the fuel tank is supported by the first and second frames in such a manner that the space between the front center bottom surface portion and the upper surface of the first frame is continuous to the space between the flat portion and the upper surface of the second frame.

According to still another embodiment, the fuel tank includes, on a surface more exterior than the flat portion, a fuel send-out section that a fuel is sent out from the fuel pump, or a power supply section for making a power supply to the fuel pump, and in the space between the flat portion and the upper surface of the second frame, the fuel pipe to be connected to the fuel send-out section or an electric wire to be connected to the power supply section is placed.

Therein, in the space between the front center bottom surface portion and the upper surface of the first frame, an electrical component linked to the power supply section or the fuel pipe may be at least partially placed.

In the following, the present invention is explained in further detail with respect to several embodiments thereof in conjunction with the accompanying drawings, wherein:
- FIG. 1: is a left side view of an embodiment of a motorcycle;
- FIG. 2: is an enlarged left side view of a fuel tank and a vehicle frame shown in FIG. 1;
- FIG. 3: is a cross sectional view cut along a line A-A shown in FIG. 4;
- FIG. 4: is an enlarged left side view showing the structure of the inside of the fuel tank and therearound shown in FIG. 1; and
- FIG. 5: is a cross sectional view cut along a line B-B shown in FIG. 4.

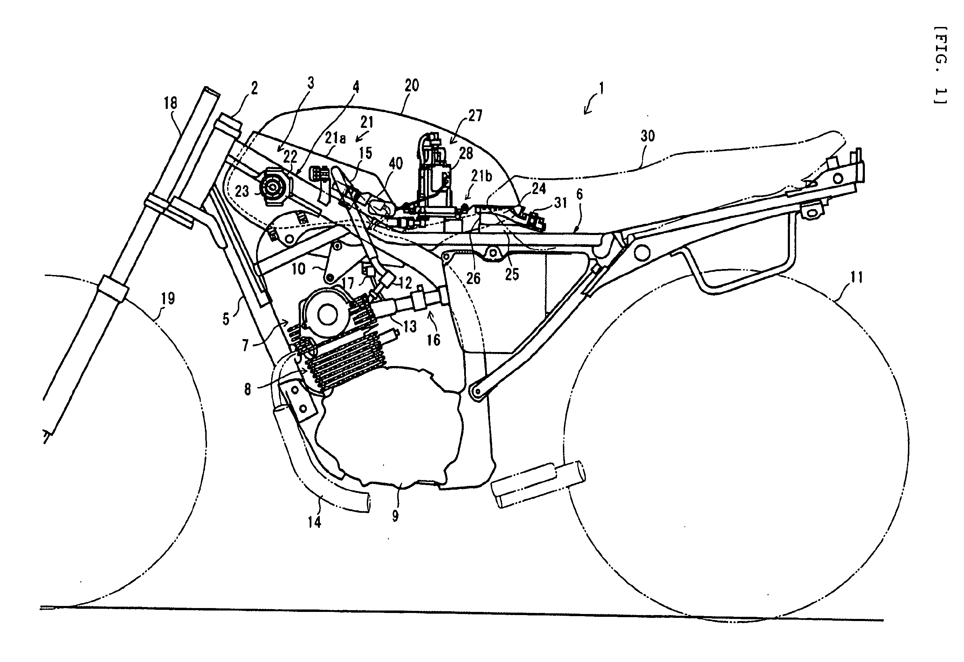

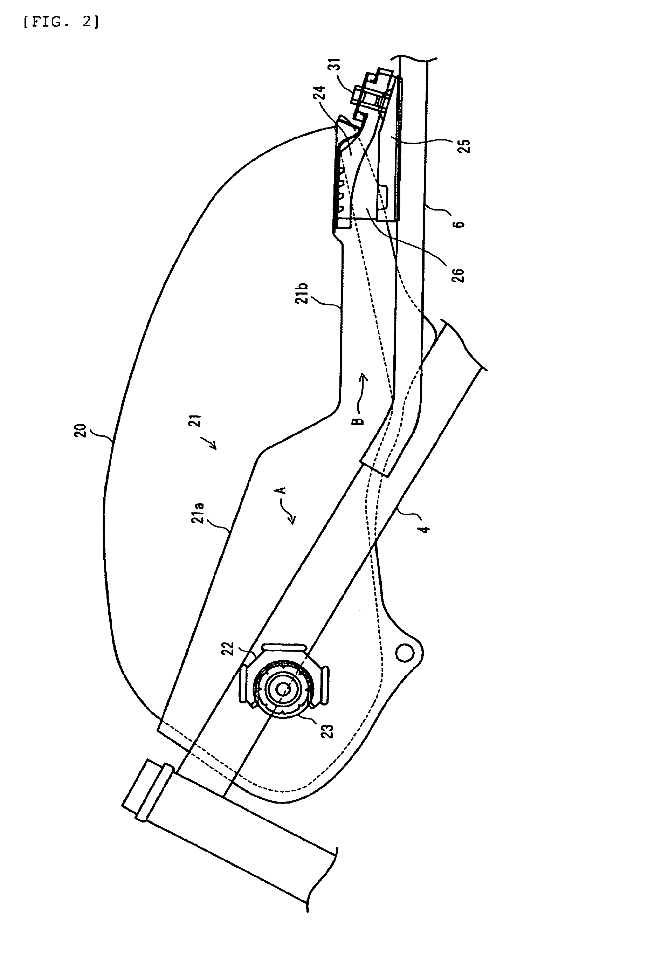

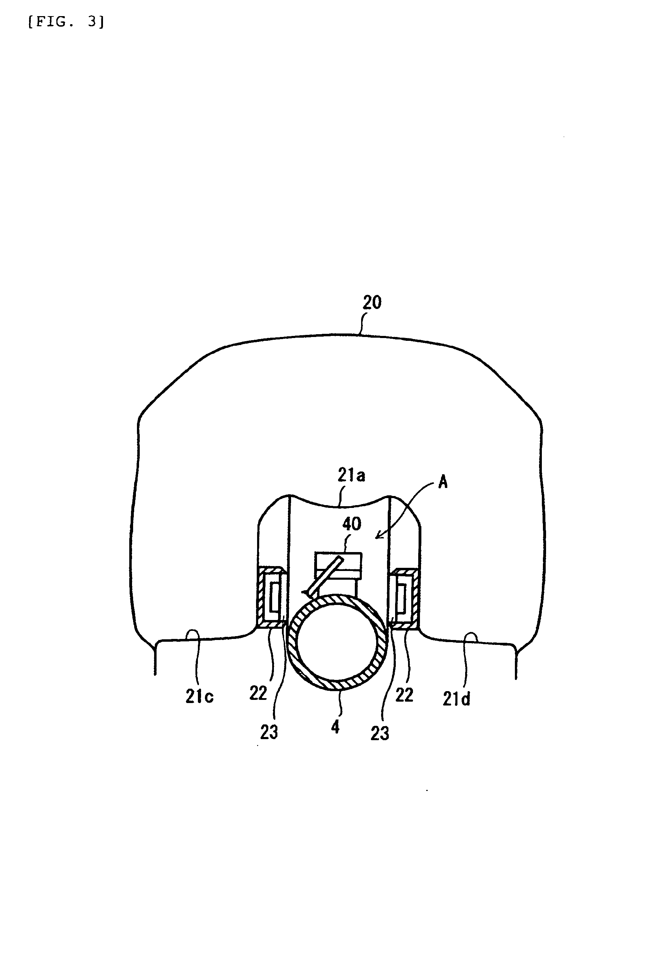

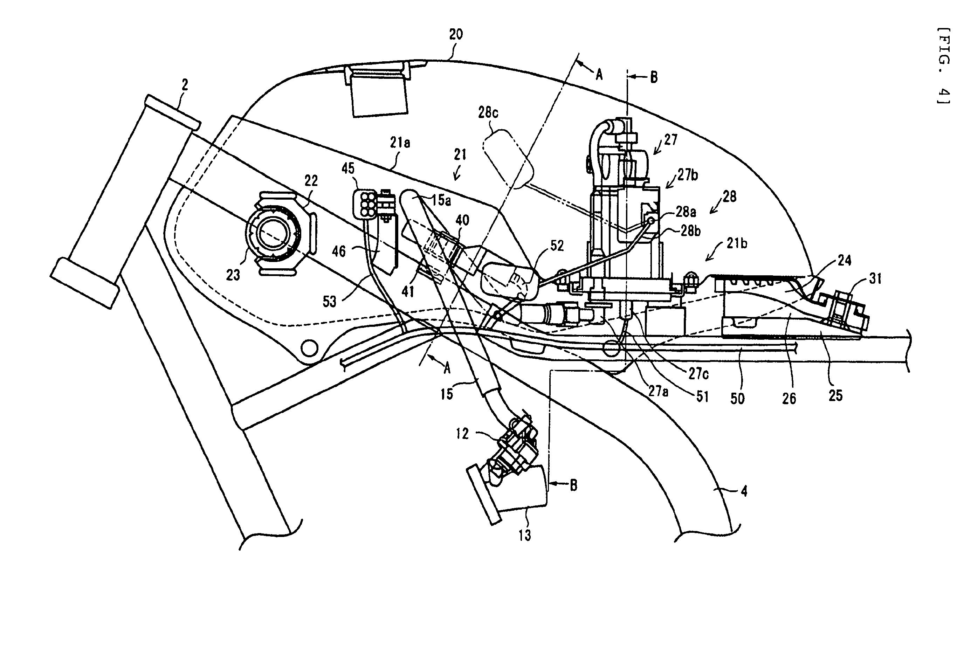

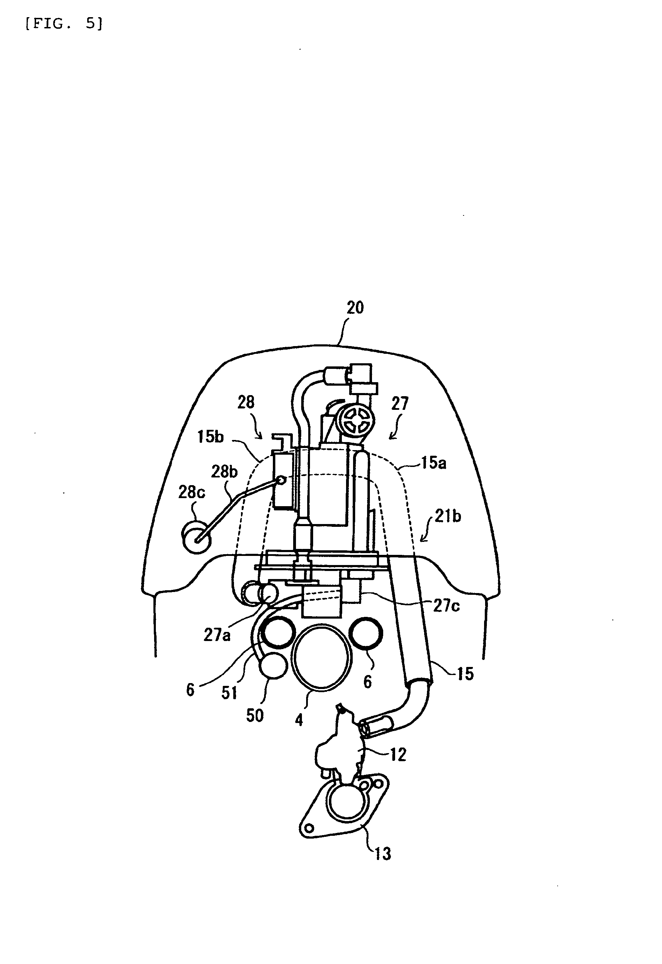

In the present embodiment, described is a case of applying it to a motor cycle. FIGS. 1 to 5 are diagrams for illustrating a motor cycle of an embodiment. FIG. 1 is a left side view of a motor cycle, FIG. 2 is an enlarged left side view of a fuel tank and a vehicle frame shown in FIG. 1, FIG. 3 is a cross sectional view cut along a line A-A shown in FIG. 4, FIG. 4 is an enlarged left side view showing the structure of the fuel tank of FIG. 1 and therearound, and FIG. 5 is a cross sectional view cut along a line B-B shown in FIG. 4.

First of all, by referring to FIG. 1, the structure of a motor cycle is described. In FIG. 1, in a motor cycle 1, a head pipe 2 is connected with a main frame 4 (first frame) that extends downward toward the rear, and a down tube 5 that also extends downward. The main frame 4 is connected with a sub frame (second frame) 6 that extends rearward substantially parallel to the main frame 4 with a specific angle therewith. A spatial portion formed by the main frame 4, the down tube 5, and the sub frame 6 accommodates an engine unit 7 that is combined with a transmission as a piece. The main frame 4 and the sub frame 6 are both located at the center portion in the vehicle-width direction so that a vehicle frame 3 is configured.

In the engine unit 7, a cylinder axis of a cylinder block 8 is slightly tilted toward the front of the vehicle, and a transmission case 9 is hung across in the vehicle-width direction to be supported by the main frame 4 and the down tube 5. The transmission case 9 is the one located beneath the cylinder block 8 to accommodate a crankshaft and the transmission. The upper end portion of the engine unit 7 is securely fixed to a bracket 10, which is securely fixed to the main frame 4. By both a drive sprocket that is not shown but is securely attached to a drive axis of the engine unit 7 and a chain that is not shown but is wound around the drive sprocket, the engine power is transmitted to a rear wheel 11 through the chain.

Further, the cylinder block 8 is connected with an injector 12, an air intake pipe 13, and an exhaust pipe 14. The injector 12 is connected with a fuel supply pipe 15 at its upper end portion, and ejects the fuel into a cylinder under the control of a control unit 40. The air intake pipe 13 is connected with a throttle body 16, and after adjusting the amount of air coming from an air cleaner that is not shown by a throttle valve (not shown) in the throttle body 16, intakes the air into the cylinder. Moreover, an air intake port portion (not shown) in the air intake pipe 13 is connected with an air intake pressure sensor 17. The air intake pressure sensor 17 has a function of detecting the air intake pressure in the air intake pressure portion, and outputting a signal as a result of air intake pressure detection to the control unit 40.

Through the head pipe 2, a steering shaft that is not shown is passed to freely rotate, and at the upper end portion of the steering shaft, a steering handle that is not shown is attached. What is more, the steering shaft is attached with the upper end portion of a front fork 18, and a front wheel 19 is pivoted at the lower end portion of the front fork 18 to freely rotate.

On the upper parts of the main frame 4 and the sub frame 6, a fuel tank 20 is provided, and on the rear portion of the fuel tank 20, a tandem seat 30 is provided. As shown in the enlarged left side view of the fuel tank and the vehicle frame of FIG. 2, a bottom surface portion 21 of the fuel tank 20 is formed with, when viewed from a vehicle side surface in the drawing, a front center bottom surface portion 21a at the front center portion, and at the rear portion thereof, a flat portion 21 b is so formed as to be parallel to a parallel portion of the sub frame 6. Furthermore, as shown in FIG. 3, the right and left side portions of the front center bottom surface portion 21 a are formed with, respectively, a front left bottom surface portion 21c and a front right bottom surface portion 21d, both of which are protruding downward lower than the front center bottom surface portion 21a. Note here that viewing from the vehicle side surface denotes a case of viewing the vehicle from side, and the left is front (or rear) and the right is rear (or front). The same is applicable to the below.

To the front left bottom surface portion 21 c and the front right bottom surface portion 21 d of the fuel tank 20, a horizontally-oriented U-shaped guide bracket 22 is each provided in an extended condition to face the main frame 4 from their side walls. The U-shaped guide bracket 22 is opening toward front (left side in the drawing). From the side surfaces of the main frame 4 facing the guide bracket 22, a positioning member 23 is each provided in an extended condition. The front portion of the fuel tank 20 is supported by the main frame 4 through insertion of the guide brackets 22 provided in an extended condition to the side surfaces of the front left bottom surface portion 21 c and the front right bottom surface portion 21d to each corresponding positioning member 23 provided in an extended condition to the position facing the side surface of the main frame 4.

As to the front left bottom surface portion 21 c and the front right bottom surface portion 21 d of the fuel tank 20, and the positioning members 23 of the main frame 4, their protrusion positions are so determined as to form a space A between the front center bottom surface portion 21 a of the fuel tank 20 and the upper surface of the main frame 4 when the front portion of the fuel tank 20 is defined by position.

At the rear (right side in the drawing) end portion of the flat portion 21 b of the fuel tank 20, a bracket 24 is attached to securely fix the rear end portion of the fuel tank 20 to the sub frame 6. To the sub frame 6, a positioning member 25 is provided in an extended condition at a position facing the bracket 24. The rear end portion of the fuel tank 20 is supported by the sub frame 6 by securely fixing the bracket 24 to the positioning member 25 of the sub frame 6 using a bolt 31 through a rubber dumper 26.

With such a structure that the rear end portion of the fuel tank 20 is supported by the sub frame 6 using the bracket 24 and the positioning member 25 of the sub frame 6, a space B is formed between the flat portion 21 b of the fuel tank 20 and the upper surface of the sub frame 6.

Moreover, as described in the foregoing, with such a structure that the front portion of the fuel tank 20 is supported by the main frame 4, and the rear end portion of the fuel tank 20 is supported by the sub frame 6, the spaces A and B are formed continuous. As a result, a plurality of components can be accommodated in the spaces A and B formed continuously between the bottom surface portion 21 of the fuel tank 20 and the upper surfaces of the main frame 6 and the sub frame 4.

Further, as to the fuel tank 20, by removing the bracket 24 provided at the rear end portion thereof from the positioning member 25, maintenance becomes possible by lifting upward the rear end portion by moving around the guide bracket 22 and the positioning member 23 locating therebefore.

As shown in the enlarged left side view of FIG. 4 showing the structure of the fuel tank therein and therearound, the flat portion 21 b is provided with a fuel pump 27 for sending out the fuel inside of the fuel tank 20 to the fuel supply pipe 15. The fuel pump 27 is so placed as to stand upright to be housed in the fuel tank 20 except for its fuel send-out section 27a and a power supply section 27c, both of which are attached at the lower end portion. The fuel pump 27 is placed to stand upright in such a manner that its fuel intake section (not shown) is exposed at the position upper than the surface of the flat portion 21 b in the fuel tank 20, and the fuel send-out section 27a and the power supply section 27c are exposed at the position lower than the flat section 21 b on the outer surface of the fuel tank 20.

The fuel pump 27 is attached with, to be a piece with its body side surface 27b, a liquid gauge 28 for measuring the fuel amount in the fuel tank 20. The liquid gauge 28 is provided with an arm section 28b to which its base end section is attached to a swing axis 28a to freely swing, and a float 28c attached at the tip portion of the arm section 28b.

The liquid gauge 28 measures the fuel amount in such a manner that the float 28c floats on the fuel liquid surface in the fuel tank 20, and in accordance with any change observed to the fuel liquid surface, the arm section 28b supporting the float 28c swings. The change observed to the swing position is converted into an angle change of the swing axis 28a so that the fuel amount is measured. FIG. 4 shows cases where the float 28c is located at the upper position in the fuel tank 20, and at the lower position therein. The liquid gauge 28 is provided with a signal/power cable (electric wire) that is not shown but is extending from the attachment position of the flat portion 21 b for connection to the power supply section 27c that is attached to the surface more external than the flat portion 21b of the fuel tank 20. This signal/power cable is connected to an internal connection terminal (not shown) of the power supply section 27c inside of the fuel tank 20, and is then connected to a main harness 50 via a harness 51 connected to an external connection terminal (not shown)of the power supply section 27c outside of the fuel tank 20. The signal/power cable outputs a fuel measurement signal to the control unit 40 via the harness 51 and the main harness 50. What is more, the signal/power cable supplies, to the fuel pump 27, the power provided by a relay 45 via the harness 51 and the main harness 50.

Further, as shown in the cross sectional view of FIG. 5 cut along the B-B line shown in FIG. 4, the fuel send-out section 27a of the fuel pump 27 is attached with a fuel supply pipe 15. The fuel supply pipe 15 is so structured as to go through the bottom surface portion 21 of the fuel tank 20 utilizing the above-described spaces A and B, extends upward from the bottom surface portion 21 toward the front left outside of the fuel tank 20, and forms a bending portion 15a in the vicinity of the swing center of the fuel tank 20 for connection to the injector 12. As shown in FIG. 5, the fuel supply pipe 15 is formed with a bending portion 15b also to the side passing through the bottom surface portion of the fuel tank 20 from the fuel send-out section 27a.

As to the fuel supply pipe 15, the part connected to the fuel send-out section 27a and the part connected to the injector 12 are both formed by a metal member, and the parts forming the bending portions 15a and 15b are formed by a plastic member.

As to the space *A* formed between the front center bottom surface portion 21 a of the bottom surface portion 21 of the fuel tank 20 and the upper surface of the main frame 4, the control unit 40 for controlling the heading direction of the motor cycle 1 is securely fixed on the upper surface of the main frame 4 by an attachment member 41. The control unit 40 is connected with a harness 52 via the main harness 50 among the injector 12, the throttle body 16, the air intake pressure sensor 17, the liquid gauge 28, and others, and controls the operation of various actuators relating to the engine unit 7 based on various detection signals coming from various sensors. Moreover, as to the space A, the relay 45 for controlling the power supply to the control system of the motor cycle 1 is securely fixed to the upper surface of the main frame 4 by an attachment member 46. The relay 45 is connected with a harness 53, and the harness 53 is connected to the main harness 50. The relay 45 supplies power to the injector 12, the throttle body 16, the air intake pressure sensor 17, the liquid gauge 28, the control unit 40, and others via the harness 53 and the main harness 50. The main harness 50 is placed along the side surfaces or others of the main frame 4 and the sub frame 6.

As described above, in the motor cycle 1 of the present embodiment, the front center bottom surface portion 21 a is formed at the front center portion of the bottom surface portion 21 of the fuel tank 20 to be parallel to the downward-slanting part of the main frame 4. At the rear portion thereof, the flat portion 21 b is formed to be parallel to the parallel portion of the sub frame 6. On the right and left side portions of the front center bottom surface portion 21 a, formed are the front left bottom surface portion 21 c and the front right bottom surface portion 21d, which are protruding downward lower than the front center bottom surface portion 21 a. The front portion of the fuel tank 20 is securely fixed to the main frame 4 with the space *A* therebetween to accommodate a plurality of components with respect to the upper surface of the main frame 4, and the rear end portion thereof is securely fixed to the main frame 4 with the space B therebetween to accommodate a plurality of components with respect to the upper surface of the sub frame 6 so that the spaces A and B form the continuous space.

With such a structure, a plurality of components can be housed in the spaces *A* and *B* formed among the bottom surface portion 21 of the fuel tank 20, the main frame 4, and the sub frame 6 so that a plurality of components can be placed with efficiency, and the maintainability of those components can be increased. The components include the control unit 40, the relay 45, the fuel pump 27 accommodated in the fuel tank 20 including the fuel send-out section 27a, the power supply section 27c, and the fuel supply pipe 15, or others.

Further, by adopting the fuel tank 20 of such a structure as the bottom surface portion 21 as above, especially, in a vehicle such as a motor cycle including the main frame 4 at the center portion in the vehicle-width direction, the capacity of the fuel tank 20 can be sufficiently ensured, and the fuel pump 27 can be placed inside of the fuel tank 20. The flexibility is thus increased for the component layout around the fuel tank 20, thereby offering ease of the component layout relating to the fuel pump 27.

What is more, the front center bottom surface portion 21 a of the fuel tank 20 is placed on the main frame 4, and the front center bottom surface portion 21 a is supported by the guide bracket 22 and the positioning member 23. The guide bracket 22 is provided in an extended condition to the side surface of the front left bottom surface portion 21c and that of the front right bottom surface portion 21d. The positioning member 23 is provided in an extended condition to the side surfaces of the main frame 4 facing the guide bracket 22. Therefore, the space A between the front center bottom surface portion 21 a and the upper surface of the main frame 4 can be kept with reliability. A plurality of electrical components relating to the motor cycle 1, e.g., the control unit 40, the relay 45, and others, can be thus easily placed without keeping any other space.

The vehicle of the present embodiment takes the structure of including a fuel tank that has a flat portion on the rear bottom surface, and a front right bottom surface portion and a front left bottom surface portion both forward of the flat portion are protruding downward lower than a front center bottom surface portion, and placing the fuel tank to be supported by a vehicle frame with a space of a sufficient size to accommodate components among the front center bottom surface portion, the flat portion, and the upper surface of the vehicle frame.

With this structure, by adopting the fuel tank of such a structure that a flat portion is provided at the rear bottom surface, and a front right bottom surface portion and a front left bottom surface portion both forward of the flat portion are protruding downward lower than a front center bottom surface portion, especially, in a vehicle such as a motor cycle including a vehicle frame at the center portion in the vehicle-width direction, the capacity of the fuel tank can be sufficiently ensured, and for example, the fuel pump can be placed inside of the fuel tank. Moreover, supporting the fuel tank with a space among the front center bottom surface portion, the flat portion, and the vehicle frame allows placement of a plurality of components such as sensor on the upper part of the vehicle frame.

Further, the vehicle of the present embodiment takes the structure that the vehicle frame is configured by a first frame that extends rearward, and a second frame that extends rearward with a specific angle with respect to the first frame, and when viewed from a vehicle side surface, the fuel tank is supported by the first and second frames with a space of a sufficient size to accommodate a component between the front center bottom surface portion and an upper surface of the first frame, and another space between the flat portion and an upper surface of the second frame.

With this structure, when viewed from a vehicle side surface, the fuel tank is supported by the first and second frames with a space of a sufficient size to accommodate components between the front center bottom surface portion and an upper surface of the first frame, and another space between the flat portion and an upper surface of the second frame. Therefore, a plurality of components including a sensor can be placed at the upper parts of the first and second frames, thereby offering ease of the component layout of the fuel tank and therearound, and increasing the maintainability of the components.

Still further, the vehicle of the present embodiment takes the structure of supporting the fuel tank by the second frame at the rear of the flat portion in such a manner that the flat portion is parallel to the second frame.

With this structure, the flat portion of the fuel tank is placed on the second frame in the parallel state, and the support section is placed behind the flat portion. Therefore, the space can be secured between the flat portion and the second frame, thereby increasing the flexibility of the component layout of the fuel tank and therearound in a case where a fuel pump is placed inside of the fuel tank, for example.

Still further, the vehicle of the present embodiment takes the structure of supporting the fuel tank, specifically side surfaces of the front right bottom surface portion and the front left bottom surface portion, is supported by a side surface of the first frame in such a manner that a space of a sufficient size is formed to accommodate a component between the front center bottom surface portion and the upper surface of the first frame.

With this structure, the fuel tank, specifically side surfaces of the front right bottom surface portion and the front left bottom surface portion, is supported by a side surface of the first frame in such a manner that a space of a sufficient size to accommodate components is formed between the front center bottom surface portion and the upper surface of the first frame. Therefore, the space can be secured for sure between the front center bottom surface portion and the upper surface of the first frame, and for example, a plurality of electrical components relating to the vehicle such as the control unit can be placed with ease without keeping any other space.

Still further, the vehicle of the present embodiment takes the structure of supporting the fuel tank by the first and second frames in such a manner that the space between the front center bottom surface portion and the upper surface of the first frame is continuous to the space between the flat portion and the upper surface of the second frame.

With this structure, the fuel tank is supported in such a manner that the space between the front center bottom surface portion and the upper surface of the first frame and the space between the flat portion of the fuel tank and the upper surface of the second frame are continuous. Therefore, a plurality of components around the fuel tank can be placed with ease without keeping any other space, and the component layout can be thus eased to a greater degree.

Still further, the vehicle of the present embodiment takes the structure of including a fuel pump provided inside of the fuel tank, and the fuel tank includes, on a surface more exterior than the flat portion, a fuel send-out that a fuel is sent out from the fuel pump, or a power supply section for making a power supply to the fuel pump, and in the space between the space between the flat portion and the upper surface of the second frame, the fuel pipe to be connected to the fuel send-out section or the power supply section is placed.

With this structure, the fuel tank includes therein a fuel pump, and a fuel send-out section to be sent out from the fuel pump or a power supply section for making a power supply to the fuel pump is provided to the flat portion of the fuel tank. Accordingly, in a space between the flat portion of the fuel tank and the upper surface of the second frame, the fuel pipe to be connected to the fuel send-out section or the power supply section can be placed, thereby easing the component layout relating to the fuel pump.

Still further, the vehicle of the present embodiment takes the structure that, in the space between the front center bottom surface portion and the upper surface of the first frame, an electrical component linked to the power supply section or the fuel pipe is at least partially placed.

With this structure, in the space between the front center bottom surface portion and the upper surface of the first frame, an electrical component linked to the power supply section or the fuel pipe is at least partially placed. Therefore, the component layout relating to the fuel pump can be eased to a greater degree.

The vehicle of the present embodiment increases the capacity of the fuel tank, and eases the component layout around the fuel tank, and especially, serves well for motor cycles and others including a vehicle frame at the center portion in the vehicle-width direction.

That is, within the afore-described embodiments, the bottom surface portion of the fuel tank is so formed as to correspond to the extended shape of the vehicle frame, and the fuel tank is so placed as to be supported by the vehicle frame with a space of a sufficient size to accommodate components between the bottom surface portion of the fuel tank and the upper surface of the vehicle frame.

The vehicle of the present embodiment takes such a structure as including a fuel tank that has a flat portion on the rear bottom surface, and a front right bottom surface portion and a front left bottom surface portion both forward of the flat portion are protruding downward lower than a front center bottom surface portion, and placing the fuel tank to be supported by a vehicle frame with a space of a sufficient size to accommodate components among the front center bottom surface portion, the flat portion, and the upper surface of the vehicle frame.

Accordingly, the fuel tank capacity can be ensured, placement of a plurality of components can be allowed on the upper part of the vehicle frame, and the component layout around a fuel tank can be eased.

Therefore, within the present embodiment, the capacity of a fuel tank is increased, a plurality of components is placed on the upper part of a vehicle frame, and the component layout is eased around the fuel tank by forming a bottom surface portion of the fuel tank to correspond to the extended shape of the vehicle frame, and the fuel tank is placed to be supported by the vehicle frame with a space of a sufficient size to accommodate components between the bottom surface portion of the fuel tank and the upper surface of the vehicle frame.

Briefly summarizing the above teaching of the embodiments to increase the capacity of a fuel tank, to place a plurality of components on the upper part of a vehicle frame, and to ease the component layout around the fuel tank by forming a bottom surface portion of the fuel tank to correspond to the extended shape of the vehicle frame, and to place the fuel tank to be supported by the vehicle frame with a space of a sufficient size to accommodate components between the bottom surface portion of the fuel tank and the upper surface of the vehicle frame, a front center bottom surface portion 21 a is formed at the front center portion of the bottom surface portion 21 of the fuel tank 20, and at the rear portion thereof, a flat portion 21 b is so formed as to be parallel to a parallel portion of the sub frame 6. The right and left side portions of the front center bottom surface portion 21 a are formed with, respectively, a front left bottom surface portion 21 c and a front right bottom surface portion 21 d, both of which are protruding downward lower than the front center bottom surface portion 21a. The front portion of the fuel tank 20 is supported by the main frame 4 with a space *A* therebetween with respect to the upper surface of the main frame 4, and the rear end portion thereof is supported by the main frame 4 with a space *B* therebetween with respect to the upper surface of the sub frame 6.

## Claims

1. Vehicle, in particular two-wheeled vehicle, comprising a fuel tank (20) and a vehicle frame (3), wherein the fuel tank (20) is supported by the vehicle frame (3) with a space (A,B) provided between a bottom surface portion (21a,21b) of the fuel tank (20) and an upper surface of the vehicle frame (3),
the vehicle frame (3) is provided with a first frame (4) that extends rearward, wherein the fuel tank (20) is supported by the first frame (4) with a space (A) provided between a front bottom surface portion (21a) of the fuel tank (20) and an upper surface of the first frame (4),
the vehicle frame (3) is provided with a second frame (6) that extends rearward with a specific angle with respect to the first frame (4), wherein the fuel tank (20) is supported by the second frame (6),
**characterized in that** the rear portion of the fuel tank (20) is provided with a flat portion (21 b), wherein the fuel tank (20) is supported by the second frame (6) at the rear of the flat portion (21 b) in such a manner that the flat portion (21 b) is parallel to the second frame (6), such that a component accommodating space (B) is provided between the flat portion (21b) and an upper surface of the second frame (6).

2. Vehicle according to claim 1, **characterized in that** a shape of the front center portion (21 a) of a bottom surface portion (21) of the fuel tank (20) is formed to correspond to a downward-slanting part of the first frame (4).

3. Vehicle according to claim 1 or 2, **characterized in that** the first frame (4) is located at a center portion in a vehicle width direction.

4. Vehicle according to one of the claims 1 to 3, **characterized in that** the fuel tank (20) is provided with a front right bottom surface portion (21 d) and a front left bottom surface portion (21 c), which are protruding downward lower than the front center bottom surface portion (21 a).

5. Vehicle according to one of the claims 1 to 4, **characterized in that** the fuel tank (20), in particular side surfaces of the front right bottom surface portion (21 d) and the front left bottom surface portion (21 c), is supported by a side surface of the first frame (4) in such a manner that the space (A) is formed between the front center bottom surface portion (21 a) and the upper surface of the first frame (4).

6. Vehicle according to one of the claims 1 to 5, **characterized by** guide brackets (22) and positioning members (23), respectively being attached to the front left bottom surface portion (21c) and the front right bottom surface portion (21d) of the fuel tank (20), and to the side surfaces of the first frame (4) and facing the guide brackets (22), wherein the fuel tank (20) is supported by the main frame (4) through insertion of the guide brackets (22) to each corresponding positioning member (23).

7. Vehicle according to one of the claims 1 to 6, **characterized in that** the second frame (6) is located at a center portion in a vehicle width direction.

8. Vehicle according to one of the claims 1 to 7, **characterized in that** the flat portion (21 b) of the fuel tank (20) is supported by a bracket (24) attached to the sub frame (6), wherein a positioning member (25) is provided at a position facing the bracket (24), and wherein the rear end portion of the fuel tank (20) is supported by the sub frame (6) by fixing the bracket (24) to the positioning member (25) of the sub frame (6) using a bolt (31) through a rubber damper (26).

9. Vehicle according to one of the claims 1 to 8, **characterized in that** the fuel tank (20) is supported by the first and second frames (4,6) in such a manner that the space (A) between the front center bottom surface portion (21a) and the upper surface of the first frame (4) is continuous to the component accommodating space (B) between the flat portion (21 b) and the upper surface of the second frame (6).

10. Vehicle according to one of the claims 1 to 9, **characterized in that** the fuel tank (20) includes, on a surface more exterior than the flat portion (21 b), a fuel send-out section that a fuel is sent out from the fuel pump, or a power supply section for making a power supply to the fuel pump, and in the component accommodating space (B) between the flat portion (21 b) and the upper surface of the second frame (6), the fuel pipe to be connected to the fuel send-out section or an electric wire to be connected to the power supply section is placed.

11. Vehicle according to claim 10, **characterized in that** in the space (A) between the front center bottom surface portion (21a) and the upper surface of the first frame (4), an electrical component linked to the power supply section or the fuel pipe is at least partially placed.

## Patentansprüche

1. Fahrzeug, insbesondere ein Zweiradfahrzeug, aufweisend einen Kraftstofftank (20) und einen Fahrzeugrahmen (3), wobei der Kraftstofftank (20) durch den Fahrzeugrahmen (3) in einem Raum (A, B) gelagert wird, vorgesehen zwischen einem Bodenobertlächenabschnitt (21 a, 21 b) des Kraftstofftanks (20) und einer oberen Oberfläche des Fahrzeugrahmens (3),
wobei der Fahrzeugrahmen (3) versehen ist mit einem ersten Rahmen (4), der sich nach hinten erstreckt, wobei der Kraftstofftank (20) durch den ersten Rahmen (4) in einem Raum (A), vorgesehen zwischen einem vorderen Bodenoberflächenabschnitt (21 a) des Kraftstofftanks (20) und einer oberen Oberfläche des ersten Rahmens (4) gelagert ist,
wobei der Fahrzeugrahmen (3) mit einem zweiten Rahmen (6) versehen ist, der sich mit einem spezifischen Winkel in Bezug auf den ersten Rahmen (4) nach hinten erstreckt, wobei der Kraftstofftank (20) durch den zweiten Rahmen (6) gelagert ist,
**dadurch gekennzeichnet, dass** der hintere Abschnitt des Kraftstofftanks (20) mit einem flachen Abschnitt (21 b) versehen ist, wobei der Kraftstofftank (20) durch den zweiten Rahmen (6) an der Rückseite des flachen Abschnittes (21 b) in solch einer Weise gelagert ist, dass der flache Abschnitt (21 b) parallel zu dem zweiten Rahmen (6) ist, so dass ein Komponentenunterbringungsraum (B) zwischen dem flachen Abschnitt (21 b) und einer oberen Oberfläche des zweiten Rahmens (6) vorgesehen ist.

2. Fahrzeug nach Anspruch 1, **dadurch gekennzeichnet, dass** eine Form des vorderen Mittelabschnitts (21 a) eines Bodenoberflächenabschnittes (21) des Kraftstofftanks (20) entsprechend eines sich geneigt erstreckenden Teils des ersten Rahmens (4) gebildet ist.

3. Fahrzeug nach Anspruch 1 oder 2, **dadurch gekennzeichnet, dass** der erste Rahmen (4) an einem Mittelabschnitt in einer Richtung der Breite des Fahrzeuges angeordnet ist.

4. Fahrzeug nach einem der Ansprüche 1 bis 3, **dadurch gekennzeichnet, dass** der Kraftstofftank (20) mit einem vorderen rechten Bodenobefflächenabschnitt (21 d) und einem vorderen linken Bodenoberflächenabschnitt (21 c) versehen ist, die nach unten weiter vorspringen als der vordere mittleren Bodenoberflächenabschnitt (21 a).

5. Fahrzeug nach einem der Ansprüche 1 bis 4, **dadurch gekennzeichnet, dass** der Kraftstofftank (20), insbesondere die Seitenoberflächen des vorderen rechten Bodenoberflächenabschnittes (21 d) und des vorderen linken Bodenoberflächenabschnittes (21 c) durch eine Seitenoberfläche des ersten Rahmens (4) in solch einer Weise gelagert ist, dass der Raum (A) zwischen dem vorderen mittleren Bodenobertlächenabschnitt (21 a) und der oberen Oberfläche des ersten Rahmens (4) gebildet ist.

6. Fahrzeug nach einem der Ansprüche 1 bis 5, **gekennzeichnet durch** Führungshalterungen (22) und Positionierungsteile (23), die jeweils mit dem vorderen linken Bodenobertlächenabschnitt (21c) und dem vorderen rechten Bodenoberflächenabschnittes (21 d) des Kraftstofftanks (20) und mit den Seitenoberflächen des ersten Rahmens (4) verbunden sind, und den Führungshalterungen (22) zugewandt sind, wobei der Kraftstofftank (20) **durch** den Hauptrahmen (4) **durch** Einsetzen der Führungshalterungen (22) in jedes der entsprechenden Positionierungsteile (23) gelagert ist.

7. Fahrzeug nach einem der Ansprüche 1 bis 6, **dadurch gekennzeichnet, dass** der zweite Rahmen (6) an einem Mittelabschnitt in einer Richtung der Breite des Fahrzeuges angeordnet ist.

8. Fahrzeug nach einem der Ansprüche 1 bis 7, **dadurch gekennzeichnet, dass** der flache Abschnitt (21 b) des Kraftstofftanks (20) durch eine Halterung (24), verbunden mit dem Unterrahmen (6), gelagert ist, wobei ein Positionierungsteil (25) an einer Position vorgesehen ist, die der Halterung (24) zugewandt ist, und wobei der hintere Endabschnitt des Kraftstofftanks (20) durch den Unterrahmen (6) gelagert durch Befestigen der Halterung (24) an dem Positionierungsteil (25) des Unterrahmens unter Verwendung einer Schraube (31) durch einen Gummidämpfer (26) gelagert ist.

9. Fahrzeug nach einem der Ansprüche 1 bis 8, **dadurch gekennzeichnet, dass** der Kraftstofftank (20) durch die ersten und zweiten Rahmen (4, 6) in solch einer Weise gelagert ist, dass der Raum (A) zwischen dem vorderen mittleren Bodenoberflächenabschnitt (21a) und der oberen Oberfläche des ersten Rahmens (4) zu dem Komponentenunterbringungsraum (B) zwischen dem flachen Abschnitt (21 b) und der oberen Oberfläche des zweiten Rahmens (6) kontinuierlich fortlaufend ist.

10. Fahrzeug nach einem der Ansprüche 1 bis 9, **dadurch gekennzeichnet, dass** der Kraftstofftank (20), auf einer Oberfläche weiter außen als der flache Abschnitt (21 b) einen Kraftstoff- Aussendeabschnitt enthält, zu dem Kraftstoff von der Kraftstoffpumpe ausgesandt ist, oder einen Energiezuführungsabschnitt, um eine Energiezuführung zu der Kraftstoffpumpe herzustellen, und in dem Komponentenunterbringungsraum (B) zwischen dem flachen Abschnitt (21 b) und der oberen Oberfläche des zweiten Rahmens (6), das Kraftstoffrohr zum Verbinden mit dem Kraftstoff- Aussendeabschnitt, oder ein elektrischer Draht zur Verbindung mit dem Energiezuführungsabschnitt angeordnet sind.

11. Fahrzeug nach Anspruch 10, **dadurch gekennzeichnet, dass** in dem Raum (A) zwischen dem vorderen mittleren Bodenoberflächenabschnitt (21 a) und der oberen Oberfläche des ersten Rahmens (4) eine elektrische Komponente, verbunden mit dem Energiezuführungsabschnitt oder das Kraftstoffrohr, zumindest teilweise angeordnet ist.

## Revendications

1. Véhicule, en particulier un véhicule à deux roues, comprenant un réservoir de carburant (20) et un châssis de véhicule (3), dans lequel le réservoir de carburant (20) est supporté par le châssis de véhicule (3) avec un espace (A, B) prévu entre une partie de surface inférieure (21a, 21b) du réservoir de carburant (20) et une surface supérieure du châssis de véhicule (3),
le châssis de véhicule (3) est doté d'un premier châssis (4) qui s'étend vers l'arrière, dans lequel le réservoir de carburant (20) est supporté par le premier châssis (4) avec un espace (A) prévu entre une partie de surface inférieure avant (21a) du réservoir de carburant (20) et une surface supérieure du premier châssis (4),
le châssis de véhicule (3) est doté d'un second châssis (6) qui s'étend vers l'arrière avec un angle spécifique par rapport au premier châssis (4), dans lequel le réservoir de carburant (20) est supporté par le second châssis (6),
**caractérisé en ce que** la partie arrière du réservoir de carburant (20) est prévue avec une partie plate (21b), dans lequel le réservoir de carburant (20) est supporté par le second châssis (6) à l'arrière de la partie plate (21b) de sorte que la partie plate (21b) est parallèle au second châssis (6), de sorte qu'un espace de logement de composant (B) est prévu entre la partie plate (21b) et une surface supérieure du second châssis (6).

2. Véhicule selon la revendication 1, **caractérisé en ce qu'**une forme de la partie centrale avant (21a) d'une partie de surface inférieure (21) du réservoir de carburant (20) est formée pour correspondre à une partie inclinée vers le bas du premier châssis (4).

3. Véhicule selon la revendication 1 ou 2, **caractérisé en ce que** le premier châssis (4) est situé au niveau d'une partie centrale dans le sens de la largeur du véhicule .

4. Véhicule selon l'une des revendications 1 à 3, **caractérisé en ce que** le réservoir de carburant (20) est doté d'une partie de surface inférieure avant droite (21d) et d'une partie de surface inférieure avant gauche (21c), qui font saillie vers le bas plus bas que la partie de surface inférieure centrale avant (21a).

5. Véhicule selon l'une quelconque des revendications 1 à 4, **caractérisé en ce que** le réservoir de carburant (20), en particulier les surfaces latérales de la partie de surface inférieure avant droite (21d) et la partie de surface inférieure avant gauche (21c), est supporté par une surface latérale du premier châssis (4) de sorte que l'espace (A) est formé entre la partie de surface inférieure centrale avant (21a) et la surface supérieure du premier châssis (4).

6. Véhicule selon l'une quelconque des revendications 1 à 5, **caractérisé par** des supports de guidage (22) et des éléments de positionnement (23), qui sont respectivement fixés sur la partie de surface inférieure avant gauche (21c) et la partie de surface inférieure avant droite (21d) du réservoir de carburant (20) et sur les surfaces latérales du premier châssis (4) et faisant face aux supports de guidage (22), dans lequel le réservoir de carburant (20) est supporté par le châssis principal (2) par l'intermédiaire de l'insertion des supports de guidage (22) dans chaque élément de positionnement (23) correspondant.

7. Véhicule selon l'une des revendications 1 à 6, **caractérisé en ce que** le second châssis (6) est situé au niveau d'une partie centrale dans le sens de la largeur du véhicule.

8. Véhicule selon l'une des revendications 1 à 7, **caractérisé en ce que** la partie plate (21b) du réservoir de carburant (20) est supportée par un support (24) fixé sur le sous-châssis (6), dans lequel un élément de positionnement (25) est prévu à une position faisant face au support (24) et dans lequel la partie d'extrémité arrière du réservoir de carburant (20) est supportée par le sous-châssis (6) en fixant le support (24) à l'élément de positionnement (25) du sous-châssis (6) en utilisant un boulon (31) à travers un amortisseur en caoutchouc (26).

9. Véhicule selon l'une des revendications 1 à 8, **caractérisé en ce que** le réservoir de carburant (20) est supporté par les premier et second châssis (4, 6) de sorte que l'espace (A) entre la partie de surface inférieure centrale avant (21a) et la surface supérieure du premier châssis (4) est continu par rapport à l'espace de logement de composant (B) entre la partie plate (21b) et la surface supérieure du second châssis (6).

10. Véhicule selon l'une des revendications 1 à 9, **caractérisé en ce que** le réservoir de carburant (20) comprend, sur une surface plus extérieure que la partie plate (21b), une section d'expulsion de carburant dans laquelle un carburant est expulsé de la pompe à carburant, ou une section d'alimentation de puissance pour alimenter la puissance à la pompe à carburant, et dans un espace de logement de composant (B) entre la partie plate (21b) et la surface supérieure du second châssis (6), on place le tuyau de carburant à raccorder à la section d'expulsion de carburant ou un fil électrique à raccorder à la section d'alimentation de puissance.

11. Véhicule selon la revendication 10, **caractérisé en ce que**, dans l'espace (A) entre la partie de surface inférieure centrale avant (21a) et la surface supérieure du premier châssis (4), on place au moins partiellement un composant électrique relié à la section d'alimentation de puissance ou au tuyau de carburant.
